# EUROPÄISCHE PATENTSCHRIFT

(11) **EP 1 037 777 B1**
(45) Veröffentlichungstag und Bekanntmachung des Hinweises auf die Patenterteilung: **26.01.2005**
(21) Anmeldenummer: 99967826.1
(22) Anmeldetag: 14.07.1999
(51) Int. Cl.: B60S 1/32

(54) **WISCHARM**
WIPER ARM
BRAS DE MONTURE D'ESSUIE-GLACE

(30) Priorität: 24.08.1998 DE 19838292
(43) Veröffentlichungstag der Anmeldung: 27.09.2000
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE1999/002172
(87) Internationale Veröffentlichungsnummer: WO 2000/010843

(56) Entgegenhaltungen:
- WO-A-92/05053
- DE-A- 19 818 723
- DE-C- 4 114 559
- FR-A- 2 632 897

## Beschreibung

### Stand der Technik

Die Erfindung geht aus von einem Wischarm nach dem Oberbegriff des Anspruchs 1.

Bekannte Scheibenwischer besitzen einen Wischarm, der aus einem Befestigungsteil und einem daran angelenkten Gelenkteil mit einer Wischstange aufgebaut ist. Ein hakenförmiges Ende der Wischstange greift in einen Einhängekasten eines Wischblatts, der zwischen zwei Seitenwangen eines Mittelbügels gebildet wird, und umfaßt einen Lagerbolzen. Das so gebildete Gelenk führt das Wischblatt während der Schwenkbewegung über die Scheibe. Das Wischblatt besitzt ein in der Regel mehrgliederiges Tragbügelsystem mit an dem Mittelbügel angelenkten, untergeordneten Bügeln, von denen zumindest einige mit Krallen an ihren Enden eine Wischleiste an deren Kopfleiste halten. Das mehrgliederige Tragbügelsystem und in die Kopfleiste eingelegte Federschienen ermöglichen, daß sich beim Wischen die Wischleiste mit einem gleichmäßigen Auflagedruck einer gebogenen Windschutzscheibe anpaßt. Solche Scheibenwischer sind z.B. aus der DE 37 44 237 A1 bekannt. Bei vereinfachten Ausführungen können untergeordnete Bügel, auch Zwischenbügel und Krallenbügel genannt, entfallen. Im einfachsten Fall besitzt der Mittelbügel selbst Krallen, mit denen er die Wischleiste hält.

Während der Fahrt, wenn der Scheibenwischer nicht betätigt wird, befinden sich der Wischarm und das Wischblatt häufig in einer windgeschützten Parkstellung, und zwar in einem sogenannten Haubenspalt zwischen einer Motorhaube und einer Windschutzscheibe des Fahrzeugs. Die Breite des Haubenspalts hängt im wesentlichen von der Höhe des Wischblatts und des Wischarms in Wischrichtung ab. Da aus optischen und strömungstechnischen Gründen der Haubenspalt möglichst schmal sein sollte, wird eine flache Bauweise angestrebt.

Wird der Scheibenwischer betätigt, schwenkt er von der windgeschützten Parkposition aus über die Windschutzscheibe und die Bügel des Tragbügelsystems werden vom Fahrwind umströmt. Es entstehen Verwirbelungen, ein erhöhter Windwiderstand und Windgeräusche. Ferner bewirken die Anströmung und Verwirbelungen Auftriebskräfte, die bei hohen Fahrgeschwindigkeiten den Anpreßdruck des Wischblatts auf die Windschutzscheibe reduzieren und die Wischqualität verschlechtern. Wenn man den Anpreßdruck für hohe Fahrgeschwindigkeiten auslegt, ist er bei geringen Fahrgeschwindigkeiten zu groß mit der Folge, daß mit den Reibkräften der Verschleiß und die Neigung zum Rattern zunehmen. Es ist bekannt, am Wischblatt eine Windleitvorrichtung, einen sogenannten Spoiler, zu befestigen, die den Fahrwind über das Wischblatt leitet und den Anpreßdruck in Abhängigkeit von der Fahrgeschwindigkeit erhöht.

Aufgrund von Design-Forderungen am Fahrzeug soll das Wischsystem, nämlich die Wischanlage und die Scheibenreinigungsanlage sowohl von außen als auch von innen nicht sichtbar sein und außerdem während des Betriebs keine Geräusche verursachen. Daher soll der Wischarm möglichst flach und strömungsgünstig ausgebildet sein. Ferner sollen Spritzdüsen für die Scheibenreinigungsanlage im Wischarm integriert sein, damit sie auf der Fahrzeughaube entfallen können. Es wurde bereits vorgeschlagen, das Gelenk zwischen dem Befestigungsteil und dem Gelenkteil zur Fahrzeugscheibe entgegen den Fahrwind zu neigen, so daß der Fahrwind an der Oberseite des Wischarms eine Anpreßkraft erzeugt. Durch die Neigung des Befestigungsteils nimmt seine Bauhöhe senkrecht zur Fahrzeugscheibe zu. Ferner bilden die nach unten weisenden Seitenwände des Befestigungsteils und des Gelenkteils einen spitzen Winkel mit der Fahrzeugscheibe in Richtung des Fahrwinds, wobei der spitze Winkel eine Auftriebskomponente bewirkt und das Unterströmen des Wischarms begünstigt.

Aus der gattungsbildenden DE 41 14 559 C1 ist ein Scheibenwischer bekannt, bei dem die Seitenfläche des Befestigungsteils und des Gelenkteils senkrecht zu einer Gelenkachse verlaufen, die entgegen der Luftströmung nach unten geneigt ist. Der so entstehende Wischarm mit parallelogrammförmigem Querschnitt zeichnet sich dadurch aus, daß er nicht höher als ein gängiger Scheibenwischer für Kraftfahrzeuge baut und somit in den üblichen Haubenspalten untergebracht werden kann.

Es wurden ferner am Wischarm angeordnete Scheibenreinigungsanlagen vorgeschlagen, bei denen Wasserleitungen, die zu Spritzdüsen führen, seitlich am Wischarm angebracht oder durch eine Zugfeder verlegt sind, durch die das Gelenkteil gegenüber dem Befestigungsteil verspannt ist.

### Vorteile der Erfindung

Nach der Erfindung hat die Deckwand des Befestigungsteils, das zweckmäßigerweise ein Blechbiegeteil ist und innen keine Verstärkungsrippen aufweist, von der Gelenkachse einen Abstand, der ausgehend von der in einer Parkstellung des Wischarms unteren Seitenwand des Befestigungsteil zur oberen Seitenwand hin zunimmt. Somit ist die Deckwand zur Fahrzeugscheibe entgegen dem Fahrwind geneigt, infolgedessen der Fahrwind die Anpreßkraft erhöht. Die Seitenwände stehen im wesentlichen senkrecht zur Fahrzeugscheibe und zum Fahrwind. Sie bewirken damit keine Auftriebskräfte. Die Bauhöhe senkrecht zur Fahrzeugscheibe ist gegenüber einem Wischarm mit einem gedrehten Gelenk bei gleicher Neigung zur Fahrzeugscheibe deutlich reduziert.

Sie kann noch weiter verringert werden, indem eine einzige Zugfeder zur oberen Seitenwand versetzt angeordnet ist und ein Gelenkbolzen im Bereich der oberen Seitenwand, im Bereich, der durch die Zugfeder höher belastet ist, einen größeren Querschnitt aufweist als im Bereich der unteren Seitenwand. Durch den geringeren Querschnitt im Bereich der unteren Seitenwand, kann hier der Abstand der Deckwand zur Gelenkachse verringert werden. Bei einer gleichen Neigung der Deckwand zur Fahrzeugscheibe ergibt sich dadurch eine geringere Bauhöhe senkrecht zur Fahrzeugscheibe und zur Strömungsrichtung des Fahrwinds. Anstelle des im Querschnitt abgesetzten Gelenkbolzens kann an jeder Seite jeweils ein Gelenkzapfen vorgesehen werden, der mit dem Gelenkteil fest verbunden ist, während das Befestigungsteil auf ihm drehbar gelagert ist, oder umgekehrt.

Durch den zunehmenden Abstand ist zwischen der Deckwand und der Gelenkachse ein freier Bauraum geschaffen worden, in dem eine Wasserleitung für eine Scheibenreinigungsanlage angeordnet werden kann. Um Spritzwasser in beiden Wischrichtungen vor das Wischblatt aufzubringen, sind zwei getrennte Wasserkanäle vorzusehen, durch die im Bedarfsfall das Wasser taktmäßig gesteuert zugeführt wird. Die weiteren Unteransprüche enthalten zweckmäßige Anordnungen der Wasserleitungen mit einem Kanal oder mehreren Kanälen je Wasserleitung. Im allgemeinen reichen zwei Wasserkanäle aus.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

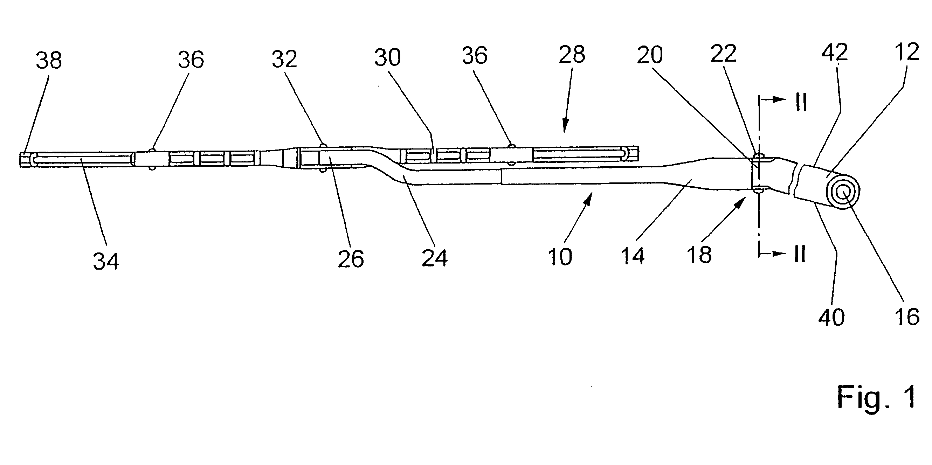

- Fig. 1: eine Draufsicht eines Scheibenwischers mit einem Wischarm und einem Wischblatt in Parkstellung,
- Fig. 2: einen Schnitt entsprechend der Linie II-II in Fig.1 und
- Fig. 3 bis Fig. 10: Varianten zu Fig. 2.

### Beschreibung der Ausführungsbeispiele

Ein Wischarm 10 ist aus einem Befestigungsteil 12 und einem Gelenkteil 14 mit einer Wischstange 24 aufgebaut. An dem Wischarm 10 ist ein Wischblatt 28 angelenkt, indem ein hakenförmiges Ende 26 der Wischstange 24 zwischen Seitenwangen eines Mittelbügels 30 des Wischblatts 28 greift und einen Lagerbolzen 32 umfaßt. An den Enden des Mittelbügels 30 sind durch Gelenkstifte 36 untergeordnete Bügel in Form von Krallenbügeln 34 angelenkt, die eine Wischleiste 38 halten.

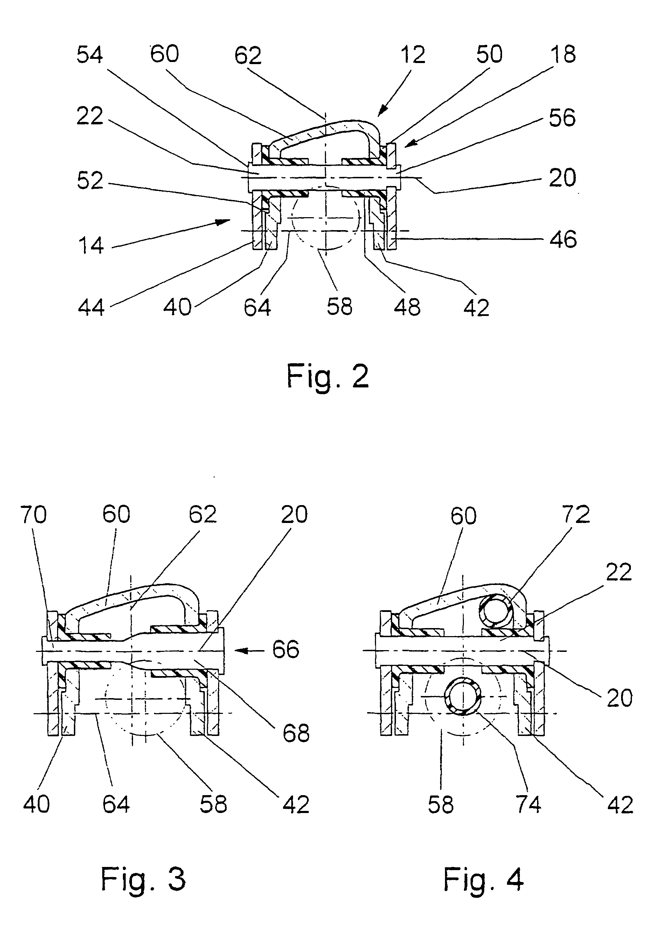

Das Befestigungsteil 12 besitzt an einem Ende eine Lagerstelle 16, an der es an einer Antriebswelle eines nicht näher dargestellten Wischerantriebs befestigt ist. An seinem anderen Ende bildet es mit dem Gelenkteil 14 ein Gelenk 18, indem Seitenwände 44 und 46 (Fig. 2) im Bereich des Gelenks 18 Seitenwände 40 und 42 des Befestigungsteils 12 überdecken und über einen Gelenkbolzen 22 um eine Gelenkachse 20 schwenkbar verbunden sind. Eine Zugfeder 58, die an einem Querstift 64 am Befestigungsteil 12 eingehängt ist und mit ihrem anderen Ende in eine nicht dargestellte Öse des Gelenkteils 14 eingreift, hält das Gelenk 18 in einer abgewinkelten Stellung und erzeugt somit eine Anpreßkraft des Wischblatts 28 an eine Fahrzeugscheibe.

Der Gelenkbolzen 22 durchdringt die Seitenwände 40, 42, 44, 46 und stützt sich axial an einem Ende über einen Bund 54 an der Außenseite der Seitenwand 44 ab, während er am Ende 56 mit der Seitenwand 46 vernietet ist. Er ist dadurch im Gelenkteil 14 drehfest gehalten, während auf ihm über Lagerbuchsen 48 aus Kunststoff das Befestigungsteil 12 schwenkbar gelagert ist. Die Lagerbuchsen 48 weisen jeweils einen Kragen 50 zwischen den Seitenwänden 40, 42 des Befestigungsteils 12 einerseits und den Seitenwänden 44, 46 des Gelenkteils 14 andererseits auf, um einen metallischen Kontakt zu vermeiden. Um den Abstand zwischen den Seitenwänden 44, 46 des Gelenkteils 14 und den Seitenwänden 40, 42 des Befestigungsteils 12 klein zu halten, besitzen die Seitenwände 40, 42 des Befestigungsteils 12 an ihrer Außenseite einen Absatz 52, der den Kragen 50 teilweise axial überdeckt.

Die Seitenwände 40 und 42 des Befestigungsteils 12 sind durch eine Deckwand 60 miteinander verbunden, die geneigt zur Gelenkachse 20 verläuft und somit im Bereich der oberen Seitenwand 42 einen größeren Abstand von der Gelenkachse 20 hat als im Bereich der Seitenwand 40. Die Gelenkachse 20 verläuft im wesentlichen parallel zu einer nicht dargestellten Windschutzscheibe des Fahrzeugs, wobei in einer Parkstellung des Wischarms 10 die Seitenwand 40 unterhalb der Seitenwand 42 liegt, so daß die Deckwand 60 dem Fahrwind entgegen geneigt ist. Dadurch erzeugt der Fahrwind eine Kraftkomponente senkrecht zur Gelenkachse 20, wodurch die Anpreßkraft des Wischblatts 28 an die Fahrzeugscheibe erhöht wird. Die senkrechte Lage der Seitenwände 40, 42, 44, 46 zur Fahrzeugscheibe bleibt dabei erhalten, wodurch der Fahrwind keine Auftriebskomponente erzeugt. Ferner ist die Höhe senkrecht zur Fahrzeugscheibe im Bereich der oberen Seitenwand 42 des Befestigungsteils 12 nur um das durch die Neigung bedingte Mindestmaß größer als bei Befestigungsteilen mit einer parallel zur Windschutzscheibe verlaufenden Deckwand.

Die Ausführungsform nach Fig. 3 besitzt einen abgesetzten Gelenkbolzen 66, der in einem Bereich 68 an der oberen Seitenwand 42 einen größeren Querschnitt aufweist als in einem Bereich 70 an der unteren Seitenwand 40. Die Zugfeder 58 ist dabei axial zu einer Mittelebene 62 zum Bereich 68 hin versetzt, so daß dieser durch Federkraft stärker belastet wird und der Bereich 70 mit dem kleineren Querschnitt entsprechend entlastet ist. Durch den geringeren Querschnitt des Bereichs 70 kann der Abstand der Deckwand 60 von der Gelenkachse 20 im Bereich der Seitenwand 40 kleiner gehalten werden und bei gleicher Neigung der Deckwand 60 ergibt sich daraus eine reduzierte maximale Höhe im Bereich der Seitenwand 42.

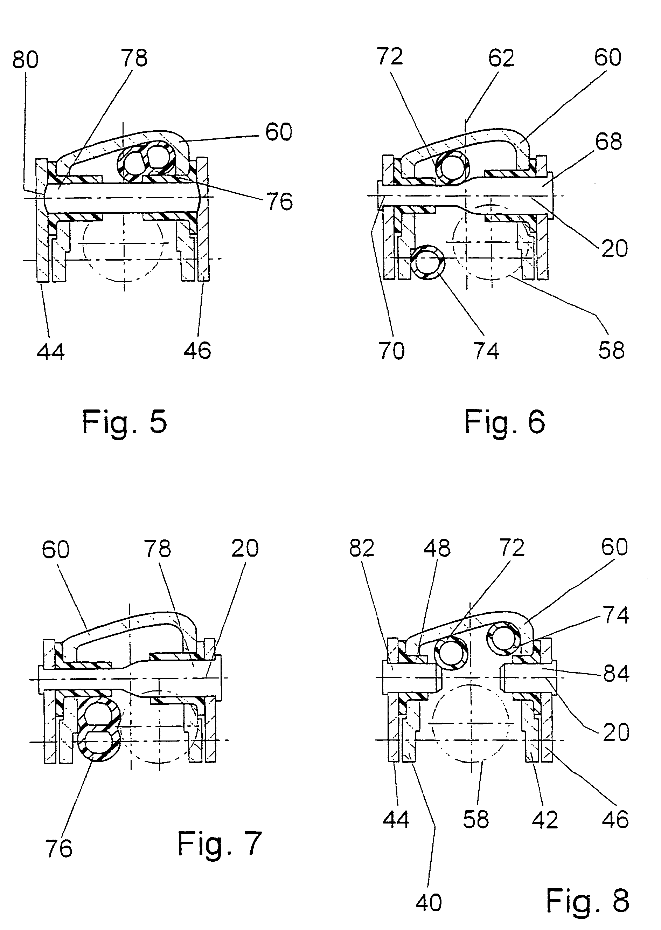

Die Ausführung nach Fig. 4 zeigt zwei Wasserleitungen 72, 74 mit jeweils einem Kanal für eine nicht näher dargestellte Scheibenreinigungsanlage. Die Wasserleitung 72 nutzt den durch die Neigung der Deckwand 60 vergrößerten Bauraum zwischen der Gelenkachse 20 und der Deckwand 60 im Bereich der Seitenwand 42, während die zweite Wasserleitung 74 in bekannter Weise durch die Zugfeder 58 verlegt ist. Bei der Variante nach Fig. 5 ist die Wasserleitung 72 durch eine Wasserleitung 76 mit zwei Wasserkanälen ersetzt. Die Wasserleitung 74 in der Zugfeder 58 kann dadurch entfallen. Ein Gelenkbolzen 78, der an den Enden konvex gestaltet ist und in entsprechende Einprägungen der Seitenwände 44 und 46 eingepaßt ist, wird mit den Seitenwänden 44, 46 verschweißt. Dadurch erhält man an den Außenseiten der Seitenwände 44 und 46 glatte Oberflächen, die die Strömungsverhältnisse begünstigen und den optischen Eindruck verbessern. Ferner werden Schmutzablagerungen und Korrosion in diesem Bereich vermieden.

Die Wasserleitungen 72 und 74 sind bei einer Ausführung nach Fig. 6 mit einem abgesetzten Gelenkbolzen 66 zum einen oberhalb des Bereichs 70 mit einem reduzierten Querschnitt nahe der Mittelebene 62 und zum anderen neben der seitlich versetzten Zugfeder 58 angeordnet. Wie Fig. 7 zeigt, kann der Bauraum neben der seitlich versetzten Zugfeder auch für eine Wasserleitung 76 mit zwei Kanälen genutzt werden.

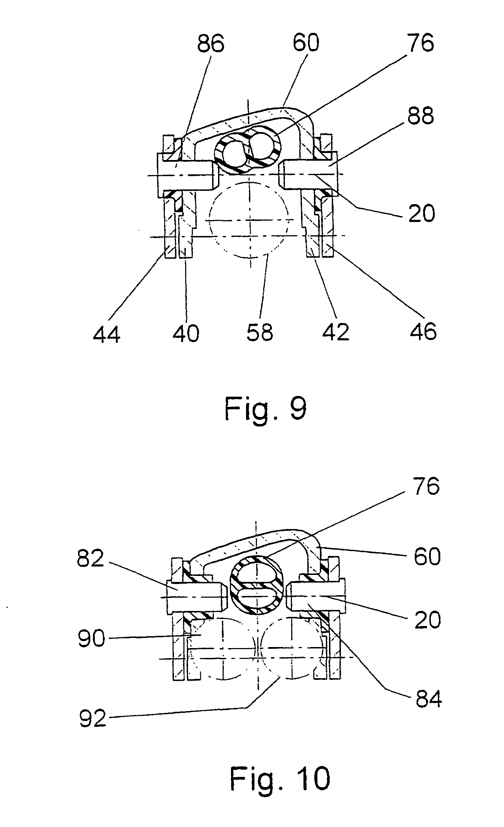

Bei den Ausführungen nach Fig. 8 bis 10 ist der Gelenkbolzen 22 durch jeweils einen Gelenkzapfen 82 und 84 auf jeder Seite ersetzt. Dabei sind die Gelenkzapfen 82, 84 in die Seitenwände 44, 46 des Gelenkteils 14 eingepreßt. Die Seitenwände 40, 42 des Befestigungsteils 12 sind über Lagerbuchsen 48 schwenkbar auf den Gelenkzapfen 82, 84 gelagert. In der Ausführung nach Fig. 9 sind Gelenkzapfen 86, 88 in den Seitenwänden 44, 46 des Gelenkteils 14 schwenkbar gelagert, während sie in die Seitenwände 40, 42 des Befestigungsteils 12 eingepreßt sind. Der Bauraum oberhalb der Gelenkachse 20 kann für zwei separate Wasserleitungen 72, 74 (Fig. 8) oder für eine Wasserleitung 76 mit zwei Kanälen genutzt werden, wobei die Wasserleitung 72, 74, 76 in den Raum zwischen den Gelenkzapfen 82, 84 bzw. 86, 88 reichen können. Dieser Raum, der in den Ausführungen nach Fig. 8 und 9 teilweise von der Zugfeder 58 genutzt wird, kann gemäß der Ausführung nach Fig. 10 vollständig für die Wasserleitung 76 zur Verfügung gestellt werden, wenn anstelle einer einzigen Zugfeder 58 zwei parallele Zugfedern 90 und 92 mit einem kleineren Durchmesser vorgesehen werden. Die Ausführungen nach Fig. 8 bis 10 zeigen Gelenkzapfen 82 bis 88 mit einem gleichen Querschnitt. Die Gelenkzapfen 84 und 88 können aber auch gegenüber dem Querschnitt der Gelenkzapfen 82, 86 einen größeren Querschnitt aufweisen entsprechend dem Gelenkbolzen 66 in den Ausführungen nach Fig. 3, Fig. 6 und Fig. 7.

### Bezugszeichen

- 10: Wischarm
- 12: Befestigungsteil
- 14: Gelenkteil
- 16: Lagerstelle
- 18: Gelenk
- 20: Gelenkachse
- 22: Gelenkbolzen
- 24: Wischstange
- 26: hakenförmiges Ende
- 28: Wischblatt
- 30: Mittelbügel
- 32: Lagerbolzen
- 34: Krallenbügel
- 36: Gelenkstift
- 38: Wischleiste
- 40: Seitenwand
- 42: Seitenwand
- 44: Seitenwand
- 46: Seitenwand
- 48: Lagerbuchse
- 50: Kragen
- 52: Absatz
- 54: Bund
- 56: Ende
- 58: Zugfeder
- 6C: Deckwand
- 62: Mittelebene
- 64: Querstift
- 66: Gelenkbolzen
- 68: Bereich
- 70: Bereich
- 72: Wasserleitung
- 74: Wasserleitung
- 76: Wasserleitung
- 78: Gelenkbolzen
- 80: Ende
- 82: Gelenkzapfen
- 84: Gelenkzapfen
- 86: Gelenkzapfen
- 88: Gelenkzapfen
- 90: Zugfeder
- 92: Zugfeder

## Patentansprüche

1. Wischarm (10) mit einem Befestigungsteil (12), das an einem ersten Ende eine Lagerstelle (16) zum Befestigen an einer Antriebsachse eines Wischerantriebs hat und an einem zweiten Ende mit einem Gelenkteil (14) über ein Gelenk (18) verbunden ist, wobei das Befestigungsteil (12) quer zur Gelenkachse (20) und im wesentlichen senkrecht zu einer Fahrzeugscheibe verlaufende Seitenwände (40, 42) aufweist, die zumindest im Bereich des Gelenks (18) mindestens auf der Seite, die einer Fahrzeugscheibe abgewandt ist, durch eine Deckwand (60) verbunden sind und sich mit Seitenwänden (44, 46) des Gelenkteils (14) überlappen, **dadurch gekennzeichnet, daß** die Deckwand (60) von der Gelenkachse (20) einen Abstand hat, der ausgehend von der in einer Parkstellung des Wischarms (10) unteren Seitenwand (40) des Befestigungsteils (12) zur oberen Seitenwand (42) hin zunimmt.

2. Wischarm (10) nach Anspruch 1, **dadurch gekennzeichnet, daß** eine einzige, das Gelenkteil (14) gegen das Befestigungsteil (12) verspannende Zugfeder (58) zur oberen Seitenwand (42) versetzt angeordnet ist.

3. Wischarm (10) nach Anspruch 2, **dadurch gekennzeichnet, daß** ein Gelenkbolzen (66) bzw. ein Gelenkzapfen (84, 88) im Bereich der oberen Seitenwand (42) einen größeren Querschnitt aufweist als der Gelenkbolzen (66) bzw. ein Gelenkzapfen (82, 86) im Bereich (70) der unteren Seitenwand (40).

4. Wischarm (10) nach einem der vorhergehenden Ansprüche, **dadurch gekennzeichnet, daß** zwischen der Deckwand (60) und der Gelenkachse (20) eine Wasserleitung (72, 76) angeordnet ist.

5. Wischarm (10) nach einem der Ansprüche 1 bis 3, **dadurch gekennzeichnet, daß** am Gelenk (18) zwei Gelenkzapfen (82, 84; 86, 88) vorgesehen sind und die Wasserleitung (76) in den Bereich zwischen den Gelenkzapfen (82, 84; 86, 88) reicht.

6. Wischarm (10) nach Anspruch 5, **dadurch gekennzeichnet, daß** die Gelenkzapfen (86, 88) an dem Befestigungsteil (12) oder die Gelenkzapfen (82, 84) an dem Gelenkteil (14) durch eine Preßverbindung oder Schweißverbindung befestigt sind.

7. Wischarm (10) nach einem der Ansprüche 5 oder 6, **dadurch gekennzeichnet, daß** zwei parallele Zugfedern (90, 92) mit kleinerem Durchmesser vorgesehen sind.

8. Wischarm (10) nach Anspruch 2, **dadurch gekennzeichnet, daß** die Wasserleitung (74, 76) neben der Zugfeder 58 angeordnet ist.

9. Wischarm (10) nach einem der vorhergehenden Ansprüche, **dadurch gekennzeichnet, daß** die Wasserleitung (76) einen mehrfach in Längsrichtung unterteilten Kanal aufweist.

10. Wischarm (10) nach einem der vorhergehenden Ansprüche, **dadurch gekennzeichnet, daß** mehrere getrennte Wasserleitungen (72, 74) mit jeweils einem Kanal vorgesehen sind.

11. Wischarm (10) nach Anspruch 10, **dadurch gekennzeichnet, daß** mindestens eine Wasserleitung (74) mit einem Kanal durch eine Zugfeder (58) verläuft.

## Claims

1. Wiper arm (10) having a fastening part (12) which, at a first end, has a bearing (16) for fastening to a driving spindle of a wiper drive and, at a second end, is connected to a hinge part (14) via a hinge (18), the fastening part (12) having side walls (40, 42) which run transversely with respect to the hinge axis (20) and essentially perpendicularly with respect to a vehicle window and are connected at least in the region of the hinge (18), at least on the side facing away from a vehicle window, by a cover wall (60) and overlap with side walls (44, 46) of the hinge part (14), **characterized in that** the cover wall (60) is at a distance from the hinge axis (20) that increases from that side wall (40) of the fastening part (12) that is at the bottom in a parking position of the wiper arm (10) towards the upper side wall (42).

2. Wiper arm (10) according to Claim 1, **characterized in that** a single tension spring (58) which clamps the hinge part (14) against the fastening part (12) is offset with respect to the upper side wall (42).

3. Wiper arm (10) according to Claim 2, **characterized in that** a hinge bolt (66) or pivot (84, 88) has, in the region of the upper side wall (42), a larger cross section than the hinge bolt (66) or a pivot (82, 86) in the region (70) of the lower side wall (40).

4. Wiper arm (10) according to one of the preceding claims, **characterized in that** a water pipe (72, 76) is arranged between the cover wall (60) and the hinge axis (20).

5. Wiper arm (10) according to one of Claims 1 to 3, **characterized in that** two pivots (82, 84; 86, 88) are provided on the hinge (18) and the water pipe (76) reaches into the region between the pivots (82, 84; 86, 88).

6. Wiper arm (10) according to Claim 5, **characterized in that** the pivots (86, 88) are fastened to the fastening part (12) or the pivots (82, 84) are fastened to the hinge part (14) by means of a press connection or welding connection.

7. Wiper arm (10) according to either of Claims 5 and 6, **characterized in that** two parallel tension springs (90, 92) of relatively small diameter are provided.

8. Wiper arm (10) according to Claim 2, **characterized in that** the water pipe (74, 76) is arranged next to the tension spring (58).

9. Wiper arm (10) according to one of the preceding claims, **characterized in that** the water pipe (76) has a duct with multiple divisions in the longitudinal direction.

10. Wiper arm (10) according to one of the preceding claims, **characterized in that** a plurality of separate water pipes (72, 74) each having a duct are provided.

11. Wiper arm (10) according to Claim 10, **characterized in that** at least one water pipe (74) having a duct runs through a tension spring (58).

## Revendications

1. Bras d'essuie-glace (10) comportant une pièce de fixation (12) reliée par une extrémité à un palier (16) pour être fixée à l'axe d'entraînement de l'entraînement d'essuie-glace et dont la seconde extrémité est reliée à une pièce d'articulation (14) par l'intermédiaire d'une articulation (18), la pièce de fixation (12) ayant des parois latérales (40, 42) transversales à l'axe d'articulation (20) essentiellement perpendiculaires à la vitre du véhicule, ces parois étant reliées, au moins au niveau de l'articulation (18), au moins d'un côté à l'opposé de celui tourné vers la vitre du véhicule par une paroi de recouvrement (60) et chevauche les parois latérales (44, 46) de la pièce d'articulation (14),
**caractérisé en ce que**
la paroi de recouvrement (60) est distante de l'axe d'articulation (20) d'une distance qui augmente à partir de la paroi latérale inférieure (40) de la pièce de fixation (12), selon la position de rangement du bras d'essuie-glace (10) en remontant vers le côté supérieur (42).

2. Bras d'essuie-glace (10) selon la revendication 1,
**caractérisé en ce qu'**
un unique ressort de traction (58) assurant la tension de la pièce d'articulation (14) par rapport à la pièce de fixation (12) est décalé par rapport à la paroi latérale supérieure (42).

3. Bras d'essuie-glace (10) selon la revendication 2,
**caractérisé en ce qu'**
un goujon d'articulation (66) ou un tourillon d'articulation (84, 88) présente au niveau de la paroi latérale supérieure (42) une section plus grande que le goujon d'articulation (66) ou le tourillon d'articulation (82, 86) dans la zone (70) de la paroi latérale inférieure (40).

4. Bras d'essuie-glace (10) selon l'une quelconque des revendications précédentes,
**caractérisé par**
une conduite d'eau (72, 76) installée entre la paroi de recouvrement (60) et l'axe d'articulation (20).

5. Bras d'essuie-glace (10) selon l'une quelconque des revendications 1 à 3,
**caractérisé en ce que**
l'articulation (18) comporte deux tourillons d'articulation (82, 84 ; 86, 88) et la conduite d'eau (76) arrive dans la zone comprise entre les tourillons d'articulation (82, 84 ; 86, 88).

6. Bras d'essuie-glace (10) selon la revendication 5,
**caractérisé en ce que**
les tourillons d'articulation (86, 88) sont fixés à la pièce de fixation (12) ou les tourillons d'articulation (82, 84) sont fixés à la pièce d'articulation (14) par une liaison pressée ou une liaison soudée.

7. Bras d'essuie-glace (10) selon l'une quelconque des revendications 5 ou 6,
**caractérisé par**
deux ressorts de traction (90, 92) parallèles, de diamètre réduit.

8. Bras d'essuie-glace (10) selon la revendication 2,
**caractérisé en ce que**
la conduite d'eau (74, 76) est installée à côté du ressort de traction (58).

9. Bras d'essuie-glace (10) selon l'une quelconque des revendications précédentes,
**caractérisé en ce que**
la conduite d'eau (76) présente un canal subdivisé plusieurs fois dans la direction longitudinale.

10. Bras d'essuie-glace (10) selon l'une quelconque des revendications précédentes,
**caractérisé par**
plusieurs conduites d'eau séparées (72, 74) ayant chacune un canal.

11. Bras d'essuie-glace (10) selon la revendication 10,
**caractérisé en ce qu'**
au moins une conduite d'eau (74) avec un canal passe dans un ressort de traction (58).
